# EUROPEAN PATENT SPECIFICATION

(11) **EP 1 520 388 B1**
(45) Date of publication and mention of the grant of the patent: **11.11.2009**
(21) Application number: 03738457.5
(22) Date of filing: 03.07.2003
(51) Int. Cl.: H04L 29/06

(54) **UPDATING PRESENCE INFORMATION**
AKTUALISIERUNG VON ANWESENHEITSINFORMATION
ACTUALISATION D'INFORMATIONS DE PRESENCE

(30) Priority: 05.07.2002 GB 0215620
(43) Date of publication of application: 06.04.2005
(73) Proprietor: Nokia Corporation, 02150 Espoo (FI)
(72) Inventor: HONKALA, Anu, FIN-33720 Tampere (FI); AARNOS, Jyrki, FIN-36240 Kangasala (FI); KAITANIEMI, Juha, FIN-33400 Tampere (FI); KALLIOKULJU, Juha, FIN-37470 Vesilahti (FI); LEPPÄNEN, Eva-Maria, FIN-33820 Tampere (FI)
(74) Representative: Williams, David John
(86) International application number: PCT/IB2003/002995
(87) International publication number: WO 2004/006533

(56) References cited:
- WO-A-02/27559
- ROSENBERG ET AL: "SIP Extensions for Presence" IEEE INTERNET DRAFT, XX, XX, 2 March 2001 (2001-03-02), pages 1-39, XP002189885

## Description

### Field of the Invention

The present invention relates to the administration of presence information such as user status information, authorisation information, and other network information in communications networks, and particularly but not exclusively to a presence service in such networks. The invention relates to users with more than one terminal particularly but not exclusively connected to a Third Generation (3G) mobile network.

### Background of the Invention

In Third Generation IMS (IP Multimedia Core Network Subsystem) communications systems, a "presence service" will be available to users. The presence service utilises a server to accept information, store it, and distribute it. The information stored may for example relate to the users' willingness to communicate or their capability for communication, or it may be general information relating to the users, or graphics data. The service offers users the opportunity to receive status information relating to one or more other user(s).

The server receives information from "presentities", i.e. users who provide information to be stored and distributed. Other users may then receive this presence information from the server. For example, a "watcher" - a user who receives presence information of a presentity - might subscribe to the presence service in order to be notified by the server when there is a change in the presence information of a particular presentity, or a watcher might simply request the current value of a particular presentity's presence information. Alternatively, a watcher could subscribe to the service so that he would be notified of a change in the presence information of any of a set of presentities.

The following are examples of details that could be stored and distributed by the presence service: physical location (e.g. "at the office" or "at home"); call state (e.g. "ready to accept communications" or "on another call" - possibly even including the identity of the other party); willingness to accept communication (e.g. "available" or "in a meeting" - this could depend on who is asking); and preferred medium (e.g. video, voice, instant messaging (IM), email). The extent of the presentity's information to be provided to the watcher may depend on the relationship of the watcher to the presentity. For example a friend may be able to receive detailed information, whereas a stranger may be allowed only to receive limited information.

Many enhanced services will be available through the use of presence information, such as reachability services, location-based call screening, live connections and instant conferencing. If presence becomes a ubiquitous service subscribers would tend to check the communications state before establishing communications with anyone whether they normally subscribed to them or not. Knowing in advance what a person's communications state was and the methods of communication for which he or she was available could eliminate the irritation of constant engaged tones and "phone tag".

As can be imagined, there are endless possibilities for services that could be provided through presence.

An ISIM (IMS subscriber identity module) identifies a subscription to an IMS network. It does not identify a terminal, and therefore it cannot identify a specific terminal that initiates a presence information update.

At present, therefore, there is no provision for supporting the use of multiple terminals associated with a single user in IP-based 3G systems. A user might wish to access presence information via, for example, a mobile phone, a PC or a PDA (personal digital assistant). It is desirable that this should be possible, and, in addition, that the terminal used to send update information to the presence service should be synchronised with the other of the user's terminals.

It is an object of the present invention to overcome one or all of the above-stated problems by providing an improved technique for administering presence information.

IETF Internet Draft "SIP Extensions for Presence" (XP-002189885, Rosenberg et al, expired September 2001) discloses a system employing multiple Presence User Agents per presentity.

### Summary of the Invention

According to the one aspect of the present invention, there is provided a method as defined in claim 1.

Preferably, the method further comprises the step of transmitting a second message including at least part of said presence information from the server.

Preferably, the second message is transmitted to at least one of the other of said terminals. Preferably, the second message is not transmitted to the first terminal.

Advantageously, this enables a user to update his/her information from any one of the terminals he/she is associated with, and the other terminals of the user are kept informed of the update so that the information in all terminals remains synchronised.

A second message sent to the first terminal would be superfluous, and would require extra air space. It is therefore advantageous that the server preferably transmits the second message only to some or all of the other terminals of the user.

It is a further advantage of the present invention that standard SUBSCRIBE and NOTIFY messages can be used. These messages are well-known in IETF and 3G IMS system models. The SUBSCRIBE and NOTIFY messages are sent by users and servers respectively within a presence service. Other services or concepts can also use the same standard mechanism.

In accordance with a second aspect of the present invention there is provided a server as defined in claim 13. The server may further comprise output means for transmitting a second message including at least part of said presence information. The second message is preferably transmitted to at least one of the other of said terminals of the user.

In a third aspect the present invention provides a communication system as defined in claim 25.

### Brief Description of Drawings

The invention will now be described with reference to the accompanying drawings, in which:
Figure 1 shows an illustrative example in which several terminals associated with a presence subscriber in a 3G IMS network and several terminals associated with other subscribers in the network;
Figure 2 is a signalling chart showing the sequence of signals transmitted according to a preferred embodiment of the present invention;
Figure 3 is a flow chart showing the steps of the preferred embodiment of the present invention.

### Detailed Description of the Embodiments

The invention is described hereinbelow with reference to a non-limiting embodiment. In particular, the invention is described in relation to the provision of a presence service in a 3G IMS mobile communications network. However, the invention is not limited to such a service or such a network.

In the figures, like reference numerals have been used to indicate like parts.

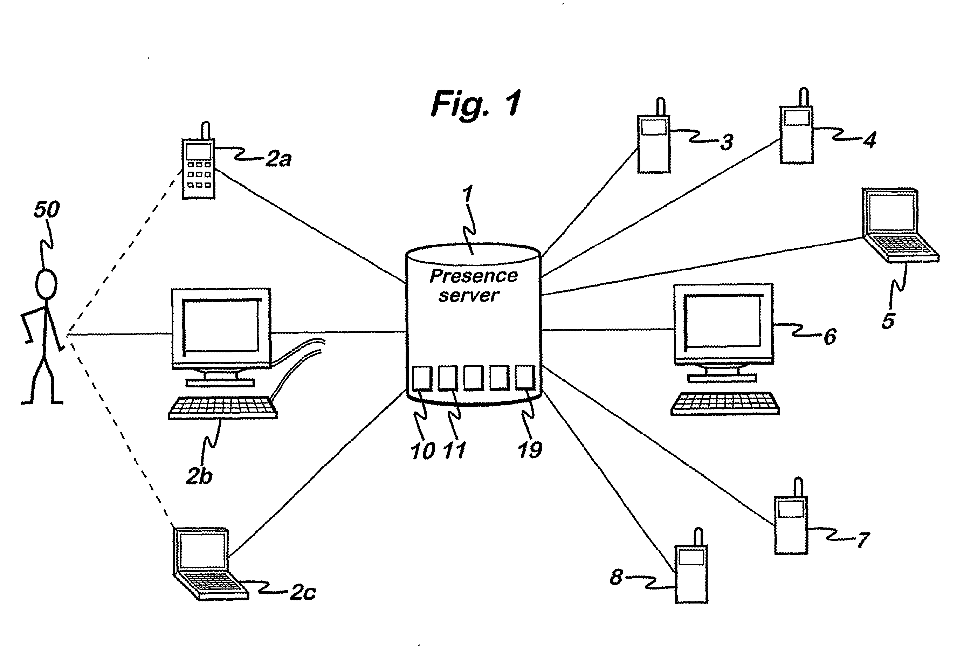

Referring first to Figure 1, terminals 2a, 2b and 2c are associated with a user 50 who uses a presence service provided by a service provider. The presence service is an application managed by an application server of the mobile network, in this example a presence server 1. Terminal 2a is user 50's mobile phone, 2b is his PC and 2c is a PDA. User 50 could also add further terminals to the service if desired, or remove terminals.

In one embodiment of the present invention, a user's presence information is stored in the presence server 1 (and a copy of at least part of the information is also stored in the user's terminals). With reference to Figure 1, each terminal 2a, 2b and 2c, and user 50, may all have presence information associated with them. This presence information and the presence information of other users and other terminals is stored in the presence server 1 as blocks of information 10-19.

If a watcher requests presence information about user 50 and all his terminals, then the presence server 1 creates a "presence document" containing the presence information of 2a, 2b , 2c and user 50. The presence document is then transmitted to the watcher. In various alternatives, depending on the watcher's request, the presence document may contain only the user 50's presence information, or the presence information of one or more terminals.

A particular presence document may thus be specific to a particular presentity's terminal or to a particular user in the present example. Alternatively, a presence document could contain information relating to multiple terminals or presentities and/or the information could be common to them all.

A presence document transmitted to a watcher may contain, for example: details of the different terminals used by user 50; the availability of the terminals for receiving communications; the preferred means of communication of each terminal at a given time; and general information related to the user which may be common to the different terminals. It is conceivable that almost any kind of information could be contained in presence documents if so desired.

User 50 can communicate with the server 1 via any of the three terminals 2a-c. HTTP or other protocols may be used for the communications.

Figure 1 also shows terminals 3-8 of other presentities or watchers connected to the 3G network. Each of the terminals 3-8 can communicate, via SIP or HTTP or otherwise, with the server 1. Each presentity who subscribes to the presence service has an associated presence information block, such as one of blocks 10, 11,...19.

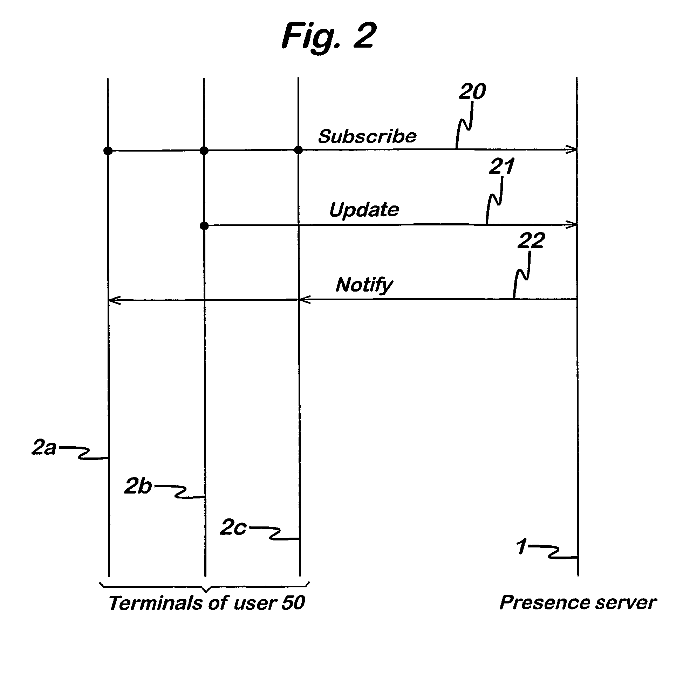

Figure 2 represents the signals transmitted during an update of user 50's presence information in accordance with the exemplary embodiment of the present invention.

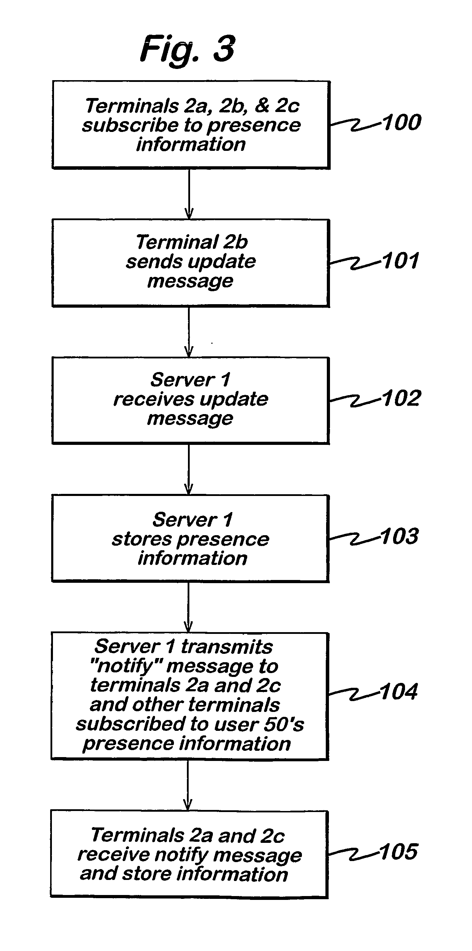

Figure 3 is a corresponding flow chart illustrating the sequence of events associated with a user updating his presence information also in accordance with the exemplary embodiment of the present invention. The particular embodiment of the present invention will now be described with reference to Figures 2 and 3.

In the example shown, user 50 uses one of his terminals such as his mobile phone 2a to transmit a SUBSCRIBE message to the presence server 1. The SUBSCRIBE message will typically be a SIP (session initiation protocol) message. This transmission is shown as 20 in Figure 2, and as step 100 in Figure 3. In the present example, terminals 2b and 2c are already subscribed to the presence information provided by server 1.

In general, in a presence service a SIP SUBSCRIBE message will be followed by a corresponding SIP NOTIFY message. For example, if a user subscribes to receive presence information of another user, he will subsequently receive a NOTIFY message to indicate the status of the event to which he subscribed, e.g. the presence information of the other user. The NOTIFY message will include presence information currently held in the presence server 1 that relates to the other user, and may consist of a presence document. An authorisation check will preferably be performed by the presence server 1 before the presence information is transmitted. In one embodiment, the server 1 has an access control list for each presentity, set up by the presentity himself, that specifies which other presentities and/or watchers are to be granted access to his presence information.

The subscriber will also receive NOTIFY messages each time the other user's presence information is changed. Such NOTIFY messages are not shown in the figures. Such NOTIFY messages are familiar to one skilled in the art.

It is also possible for a user to subscribe to specific presence information so that he will only receive a NOTIFY message when that particular information is updated.

In the exemplary embodiment, at some time after user 50 subscribes to presence server 1, he updates his presence information using his PC, 2b. User 50 sends a message 21 to the server 1. In accordance with the invention, the message 21 includes an identifier of the terminal used to make the update, i.e. an identifier for PC 2b. The message 21 may also include an identifier of the user 50. The user identifier may be in the form of an HTTP URL, and should preferably uniquely identify the presence information associated with user 50. The message 21 may also include information on the status of the user 50 or the terminal 2b, such as whether the user wishes to be able to receive communications via certain means. For example, the user may wish to prevent incoming calls to his mobile during a meeting. He could send a message to the server 1 indicating that he does not wish to be disturbed. The server 1 would then forward this information to any watchers subscribed to his presence information. The step of sending an update message is shown as 101 in Figure 3.

The server 1 then receives message 21, identifies one or more appropriate presence information blocks 10-19, and stores the updated presence information in the presence information blocks 10-19. The receiving and storing steps are labelled as 102 and 103 respectively in Figure 3.

The server uses the terminal identifier to determine which of user 50's terminals transmitted the message 21, and consequently preferably transmits a NOTIFY message 22 (step 104 in Figure 3) to terminals 2a and 2c which were not used to update the presence information. The contents of this NOTIFY message, defining the presence information of user 50 or one or more of his terminals, are then stored by the terminals 2a and 2c (step 105 in Figure 3) so that each of user 50's three terminals has a local copy of that presence information which is relevant to the terminal, and the local copies remain synchronised with each other and with the presence information blocks 10-19 in the server 1. As mentioned above, preferably no NOTIFY message is transmitted to the terminal 2b that sent the update message 21.

In addition to transmitting the NOTIFY message 22 to terminals 2a and 2c, the server 1 may also transmit the message 22 to any other terminals 3-8 that are subscribed to user 50's presence information to alert the other subscribers to the change in user 50's presence information.

Preferably, it is possible for a user to update his or her presence information from a PC. It is preferred that the first message (the update message) should be capable of being transmitted from PCs. In the case where the first message is transmitted from a PC, additional authentication mechanisms may be used. This may be necessary for security reasons, since PCs generally do not have identities recognised by the 3G network. Similarly, all SUBSCRIBE messages from other terminals may require authentication mechanisms.

It is preferred that the update message can be sent to the presence server from any of the user's terminals, such as his mobile, his PC or his PDA.

The update message may suitably comprise details of the status of the user, such as whether or not he wishes to be contacted, and if so, by what means.

It will be apparent that the present invention is not limited to wireless networks, or terminals which communicate with a server via a wireless network.

In view of the foregoing description it will be evident to a person skilled in the art that various modifications may be made within the scope of the invention.

## Claims

1. A method of administering presence information associated with a user (50) and a plurality of terminals (2a, 2b, 2c) associated with said user (50) comprising:
receiving at a server (1) a first message from a first terminal, the first terminal being one of a plurality of terminals (2a, 2b, 2c) associated with the user (50), the first message comprising presence information and an identifier of the first terminal;
**characterised in that** the method further comprises:
transmitting a second message including at least part of said presence information from the server (1), wherein the second message is transmitted to at least one terminal of the plurality of terminals associated with the user (50) other than the first terminal.

2. A method according to claim 1, further comprising transmitting the second message to a plurality of said other terminals.

3. A method according to claim 2, further comprising transmitting the second message to all of said other terminals.

4. A method according to any preceding claim further comprising transmitting the second message to terminals associated with other users.

5. A method according to claim 4, wherein the other users include watchers.

6. A method according to any preceding claim, wherein the first terminal of the user can be any one of the said plurality of terminals (2a, 2b, 2c).

7. A method according to any preceding claim, wherein the first message comprises presence information related to at least one of the user and the first terminal.

8. A method according to claim 7, wherein the second message comprises presence information related to at least one of the user and the first terminal.

9. A method according to any preceding claim, wherein the first message comprises an identifier of the user.

10. A method according to any preceding claim, wherein the first terminal is a mobile telephone or a personal computer.

11. A method according to any preceding claim, wherein the first message is a SIP message or an HTTP message.

12. A method according to any preceding claim, wherein the second message is a SIP message or an HTTP message.

13. A server (1) for administering presence information associated with a user (50) and a plurality of terminals (2a, 2b, 2c) associated with said user (50), the server (1) comprising:
input means for receiving a first message from a first terminal, the first terminal being one of a plurality of terminals associated with the user (50) the first message comprising presence information and an identifier of the first terminal,
**characterised in that** the server further comprises:
output means for transmitting a second message including at least part of said presence information;
wherein the second message is transmitted to at least one terminal of the plurality of terminals associated with the user (50) other than the first terminal.

14. A server according to claim 13, wherein the second message is transmitted to a plurality of said other terminals.

15. A server according to claim 13 wherein the second message is transmitted to all of said other terminals (2).

16. A server according to any of claims 13 to 15, wherein the output means is adapted to transmit the second message to terminals associated with other users.

17. A server according to claim 16, wherein the other users include watchers.

18. A server according to any of claims 13 to 17, wherein the first terminal of the user can be any one of the said plurality of terminals (2a, 2b, 2c).

19. A sever according to any of claims 13 to 18, wherein the first message comprises presence information related to at least one of the user and the first terminal.

20. A server according to claim 19, wherein the second message comprises presence information related to at least one of the user and the first terminal.

21. A server according to any of claims 13 to 20, wherein the first message comprises an identifier of the user.

22. A server according to any of claims 13 to 21, wherein the first terminal is a mobile telephone or a personal computer.

23. A server according to any of claims 13 to 22, wherein the first message is SIP message or an HTTP message.

24. A server according to any of claims 13 to 23, wherein the second message is a SIP message or an HTTP message.

25. A communication system comprising:
a plurality of terminals (2a, 2b, 2c) associated with a user (50) and
a server (1) comprising:
input means for receiving a first message from a first terminal, the first terminal being one of a plurality of terminals (2a, 2b, 2c) associated with the user (50) the first message comprising presence information and an identifier of the first terminal,
**characterised in that** the server (1) further comprises:
output means for transmitting a second message including at least part of said presence information;
wherein the second message is transmitted to at least one terminal of the plurality of terminals associated with the user (50) other than the first terminal.

26. A communication system according to claim 25, further comprising transmitting the second message to a plurality of said other terminals.

27. A communication system according to claim 26, further comprising transmitting the second message to all of said other terminals.

28. A communication system according to any of claim 26 to 27, wherein the output means is adapted to transmit the second message to terminals associated with other users.

29. A communication system according to claim 28, wherein the other users include watchers.

30. A communication system according to any of claims 26 to 29, wherein the first terminal of the user can be any one of said plurality of terminals (2a, 2b, 2c).

31. A communication system according to any of claims 26 to 30, wherein the first message comprises presence information related to at least one of the user and the first terminal.

32. A communication system according to claim 31, wherein the second message comprises presence information related to at least one of the user and the first terminal.

33. A communication system according to any of claims 26 to 32, wherein the first message comprises an identifier of the user.

34. A communication system according to any of claims 26 to 33, wherein the first terminal is a mobile telephone or a personal computer.

35. A communication system according to any of claims 26 to 34, wherein the first message is a SIP message or an HTTP message.

36. A communication system according to any of claims 26 to 35,
wherein the second message is a SIP message to an HTTP message.

## Patentansprüche

1. Verfahren zum Ausgeben von Anwesenheitsinformationen, die mit einem Benutzer (50) und mit mehreren Endgeräten (2a, 2b, 2c) verknüpft sind, die mit dem Benutzer (50) verknüpft sind, umfassend:
Empfangen einer ersten Nachricht von einem ersten Endgerät an einem Server (1),
wobei das erste Endgerät eines von mehreren Endgeräten (2a, 2b, 2c) ist, die mit dem Benutzer (50) verknüpft sind, wobei die erste Nachricht Anwesenheitsinformationen und eine Kennung des ersten Endgerätes umfasst,
**dadurch gekennzeichnet, dass** das Verfahren weiter umfasst:
Senden einer zweiten Nachricht, die zumindest einen Teil der Anwesenheitsinformationen umfasst, von dem Server (1), wobei die zweite Nachricht an mindestens ein anderes Endgerät, als dem ersten Endgerät, der mehreren Endgeräte gesendet wird, die mit dem Benutzer (50) verknüpft sind.

2. Verfahren gemäß Anspruch 1, weiter umfassend:
Senden der zweiten Nachricht an mehrere der anderen Endgeräte.

3. Verfahren gemäß Anspruch 2, weiter umfassend:
Senden der zweiten Nachricht an alle anderen der Endgeräte.

4. Verfahren gemäß einem der vorstehenden Ansprüche, weiter umfassend:
Senden der zweiten Nachricht an Endgeräte, die mit anderen Benutzern verknüpft sind.

5. Verfahren gemäß Anspruch 4, wobei die anderen Benutzer Beobachter einschließen.

6. Verfahren gemäß einem der vorstehenden Ansprüche, wobei das erste Endgerät des Benutzers irgendeines der mehreren Endgeräte (2a, 2b, 2c) sein kann.

7. Verfahren gemäß einem der vorstehenden Ansprüche, wobei die erste Nachricht Anwesenheitsinformationen umfasst, die sich auf den Benutzer (50) und/oder das erste Endgerät beziehen.

8. Verfahren gemäß Anspruch 7, wobei die zweite Nachricht Anwesenheitsinformationen umfasst, die sich auf den Benutzer (50) und/oder das erste Endgerät beziehen.

9. Verfahren gemäß einem der vorstehenden Ansprüche, wobei die erste Nachricht eine Kennung des Benutzers umfasst.

10. Verfahren gemäß einem der vorstehenden Ansprüche, wobei das erste Endgerät ein Mobiltelefon oder ein Personalcomputer ist.

11. Verfahren gemäß einem der vorstehenden Ansprüche, wobei die erste Nachricht eine SIP-Nachricht oder eine HTTP-Nachricht ist.

12. Verfahren gemäß einem der vorstehenden Ansprüche, wobei die zweite Nachricht eine SIP-Nachricht oder eine HTTP-Nachricht ist.

13. Server (1) zum Ausgeben von Anwesenheitsinformationen, die mit einem Benutzer (50) und mit mehreren Endgeräten (2a, 2b, 2c) verknüpft sind, die mit dem Benutzer (50) verknüpft sind, wobei der Server (1) umfasst:
Eingabemittel zum Empfangen einer ersten Nachricht von einem ersten Endgerät,
wobei das erste Endgerät eines von mehreren Endgeräten ist, die mit dem Benutzer (50) verknüpft sind, wobei die ersten Nachricht Anwesenheitsinformationen und eine Kennung des ersten Endgerätes umfasst,
**dadurch gekennzeichnet**, der Server weiter umfasst:
Ausgabemittel zum Senden einer zweiten Nachricht, die zumindest einen Teil der Anwesenheitsinformation umfasst,
wobei die zweite Nachricht an mindestens ein anderes Endgerät, als dem ersten Endgerät der mehreren Endgeräte gesendet wird, die mit dem Benutzer (50) verknüpft sind.

14. Server gemäß Anspruch 13, wobei die zweite Nachricht an mehrere der anderen Endgeräte gesendet wird.

15. Server gemäß Anspruch 13, wobei die zweite Nachricht an alle anderen der Endgeräte (2) gesendet wird.

16. Server gemäß einem der Ansprüche 13 bis 15, wobei das Ausgabemittel eingerichtet ist, die zweite Nachricht an Endgeräte zu senden, die mit anderen Benutzern verknüpft sind.

17. Server gemäß Anspruch 16, wobei die anderen Benutzer Beobachter einschließen.

18. Server gemäß einem der Ansprüche 13 bis 17, wobei das erste Endgerät des Benutzers irgendeines der mehreren Endgeräte (2a, 2b, 2c) sein kann.

19. Server gemäß einem der Ansprüche 13 bis 18, wobei die erste Nachricht Anwesenheitsinformationen umfasst, die sich auf den Benutzer (50) und/oder das erste Endgerät beziehen.

20. Server gemäß Anspruch 19, wobei die zweite Nachricht Anwesenheitsinformationen umfasst, die sich auf den Benutzer (50) und/oder das erste Endgerät beziehen.

21. Server gemäß einem der Ansprüche 13 bis 20, wobei die erste Nachricht eine Kennung des Benutzers umfasst.

22. Server gemäß einem der Ansprüche 13 bis 21, wobei das erste Endgerät ein Mobiltelefon oder ein Personalcomputer ist.

23. Server gemäß einem der Ansprüche 13 bis 22, wobei die erste Nachricht eine SIP-Nachricht oder eine HTTP-Nachricht ist.

24. Server gemäß einem der Ansprüche 13 bis 23, wobei die zweite Nachricht eine SIP-Nachricht oder eine HTTP-Nachricht ist.

25. Kommunikationssystem umfassend:
mehrere Endgeräte (2a, 2b, 2c), die mit einem Benutzer (50) verknüpft sind, und
einen Server (1), umfassend:
Eingabemittel zum Empfangen einer ersten Nachricht von einem ersten Endgerät,
wobei das erste Endgerät eines von mehreren Endgeräten (2a, 2b, 2c) ist, die mit dem Benutzer (50) verknüpft sind, wobei die ersten Nachricht Anwesenheitsinformationen und eine Kennung des ersten Endgerätes umfasst,
**dadurch gekennzeichnet, dass** der Server (1) weiter umfasst:
Ausgabemittel zum Senden einer zweiten Nachricht, die zumindest einen Teil der Anwesenheitsinformationen umfasst,
wobei die zweite Nachricht an mindestens ein anderes Endgerät, als dem ersten Endgerät der mehreren Endgeräte gesendet wird, die mit dem Benutzer (50) verknüpft sind.

26. Kommunikationssystem gemäß Anspruch 25, weiter umfassend Senden der zweiten Nachricht an mehrere der anderen Endgeräte.

27. Kommunikationssystem gemäß Anspruch 26, weiter umfassend:
Senden der zweiten Nachricht an alle der anderen Endgeräte.

28. Kommunikationssystem gemäß einem der Ansprüche 26 bis 27, wobei das Ausgabemittel eingerichtet ist, die zweite Nachricht an Endgeräte zu senden, die mit anderen Benutzern verknüpft sind.

29. Kommunikationssystem gemäß Anspruch 28, wobei die anderen Benutzer Beobachter einschließen.

30. Kommunikationssystem gemäß einem der Ansprüche 26 bis 29, wobei das erste Endgerät des Benutzers irgendeines der mehreren Endgeräte (2a, 2b, 2c) sein kann.

31. Kommunikationssystem gemäß einem der Ansprüche 26 bis 30, wobei die erste Nachricht Anwesenheitsinformationen umfasst, die sich auf den Benutzer und/oder das erste Endgerät beziehen.

32. Kommunikationssystem gemäß Anspruch 31, wobei die zweite Nachricht Anwesenheitsinformationen umfasst, die sich auf den Benutzer und/oder das erste Endgerät beziehen.

33. Kommunikationssystem gemäß einem der Ansprüche 26 bis 32, wobei die erste Nachricht eine Kennung des Benutzers umfasst.

34. Kommunikationssystem gemäß einem der Ansprüche 26 bis 33, wobei das erste Endgerät ein Mobiltelefon oder ein Personalcomputer ist.

35. Kommunikationssystem gemäß einem der Ansprüche 26 bis 34, wobei die erste Nachricht eine SIP-Nachricht oder eine HTTP-Nachricht ist.

36. Kommunikationssystem gemäß einem der Ansprüche 26 bis 35, wobei die zweite Nachricht eine SIP-Nachricht oder eine HTTP-Nachricht ist.

## Revendications

1. Procédé d'administration d'informations de présence associées à un utilisateur (50) et une pluralité de terminaux (2a, 2b, 2c) associés au dit utilisateur (50), comprenant l'étape consistant à :
recevoir à un serveur (1) un premier message d'un premier terminal, le premier terminal étant l'un d'une pluralité de terminaux (2a, 2b, 2c) associés à l'utilisateur (50), le premier message comprenant des informations de présence et un identifiant du premier terminal ;
**caractérisé en ce que** le procédé comprend en outre l'étape consistant à :
transmettre un deuxième message comprenant au moins une partie desdites informations de présence à partir du serveur (1), dans lequel le deuxième message est transmis à au moins un terminal de la pluralité de terminaux associés à l'utilisateur (50) autre que le premier terminal.

2. Procédé selon la revendication 1, comprenant en outre l'étape consistant à transmettre le deuxième message à une pluralité desdits autres terminaux.

3. Procédé selon la revendication 2, comprenant en outre l'étape consistant à transmettre le deuxième message à tous lesdits autres terminaux.

4. Procédé selon l'une quelconque des revendications précédentes, comprenant en outre l'étape consistant à transmettre le deuxième message à des terminaux associés à d'autres utilisateurs.

5. Procédé selon la revendication 4, dans lequel les autres utilisateurs comprennent des spectateurs.

6. Procédé selon l'une quelconque des revendications précédentes, dans lequel le premier terminal de l'utilisateur peut être l'un quelconque de ladite pluralité de terminaux (2a, 2b, 2c).

7. Procédé selon l'une quelconque des revendications précédentes, dans lequel le premier message comprend des informations de présence associées à au moins l'un de l'utilisateur et du premier terminal.

8. Procédé selon la revendication 7, dans lequel le deuxième message comprend des informations de présence associées à au moins l'un de l'utilisateur et du premier terminal.

9. Procédé selon l'une quelconque des revendications précédentes, dans lequel le premier message comprend un identifiant de l'utilisateur.

10. Procédé selon l'une quelconque des revendications précédentes,
dans lequel le premier terminal est un téléphone portable ou un ordinateur personnel.

11. Procédé selon l'une quelconque des revendications précédentes,
dans lequel le premier message est un message SIP ou un message HTTP.

12. Procédé selon l'une quelconque des revendications précédentes,
dans lequel le deuxième message est un message SIP ou un message HTTP.

13. Serveur (1) pour administrer des informations de présence associées à un utilisateur (50) et une pluralité de terminaux (2a, 2b, 2c) associés au dit utilisateur (50), le serveur (1) comprenant :
des moyens d'entrée pour recevoir un premier message d'un premier terminal, le premier terminal étant l'un d'une pluralité de terminaux associés à l'utilisateur (50), le premier message comprenant des informations de présence et un identifiant du premier terminal,
**caractérisé en ce que** le serveur comprend en outre :
des moyens de sortie pour transmettre un deuxième message comprenant au moins une partie desdites informations de présence ;
dans lequel le deuxième message est transmis à au moins un terminal de la pluralité de terminaux associés à l'utilisateur (50) autre que le premier terminal.

14. Serveur selon la revendication 13, dans lequel le deuxième message est transmis à une pluralité desdits autres terminaux.

15. Serveur selon la revendication 13, dans lequel le deuxième message est transmis à tous lesdits autres terminaux (2).

16. Serveur selon l'une quelconque des revendications 13 à 15, dans lequel les moyens de sortie sont aptes à transmettre le deuxième message à des terminaux associés à d'autres utilisateurs.

17. Serveur selon la revendication 16, dans lequel les autres utilisateurs comprennent des spectateurs.

18. Serveur selon l'une quelconque des revendications 13 à 17, dans lequel le premier terminal de l'utilisateur peut être l'un quelconque de ladite pluralité de terminaux (2a, 2b, 2c).

19. Serveur selon l'une quelconque des revendications 13 à 18, dans lequel le premier message comprend des informations de présence associées à au moins l'un de l'utilisateur et du premier terminal.

20. Serveur selon la revendication 19, dans lequel le deuxième message comprend des informations de présence associées à au moins l'un de l'utilisateur et du premier terminal.

21. Serveur selon l'une quelconque des revendications 13 à 20, dans lequel le premier message comprend un identifiant de l'utilisateur.

22. Serveur selon l'une quelconque des revendications 13 à 21, dans lequel le premier terminal est un téléphone portable ou un ordinateur personnel.

23. Serveur selon l'une quelconque des revendications 13 à 22, dans lequel le premier message est un message SIP ou un message HTTP.

24. Serveur selon l'une quelconque des revendications 13 à 23, dans lequel le deuxième message est un message SIP ou un message HTTP.

25. Système de communication comprenant :
une pluralité de terminaux (2a, 2b, 2c) associés à un utilisateur (50), et
un serveur (1) comprenant :
des moyens d'entrée pour recevoir un premier message d'un premier terminal, le premier terminal étant l'un d'une pluralité de terminaux associés à l'utilisateur (50), le premier message comprenant des informations de présence et un identifiant du premier terminal,
**caractérisé en ce que** le serveur (1) comprend en outre :
des moyens de sortie pour transmettre un deuxième message comprenant au moins une partie desdites informations de présence ;
dans lequel le deuxième message est transmis à au moins un terminal de la pluralité de terminaux associés à l'utilisateur (50) autre que le premier terminal.

26. Système de communication selon la revendication 25, comprenant en outre la transmission du deuxième message à une pluralité desdits autres terminaux.

27. Système de communication selon la revendication 26, comprenant en outre la transmission du deuxième message à tous lesdits autres terminaux.

28. Système de communication selon l'une quelconque des revendications 26 à 27, dans lequel les moyens de sortie sont aptes à transmettre le deuxième message à des terminaux associés à d'autres utilisateurs.

29. Système de communication selon la revendication 28, dans lequel les autres utilisateurs comprennent des spectateurs.

30. Système de communication selon l'une quelconque des revendications 26 à 29, dans lequel le premier terminal de l'utilisateur peut être l'un quelconque de ladite pluralité de terminaux (2a, 2b, 2c).

31. Système de communication selon l'une quelconque des revendications 26 à 30, dans lequel le premier message comprend des informations de présence associées à au moins l'un de l'utilisateur et du premier terminal.

32. Système de communication selon la revendication 31, dans lequel le deuxième message comprend des informations de présence associées à au moins l'un de l'utilisateur et du premier terminal.

33. Système de communication selon l'une quelconque des revendications 26 à 32, dans lequel le premier message comprend un identifiant de l'utilisateur.

34. Système de communication selon l'une quelconque des revendications 26 à 33, dans lequel le premier terminal est un téléphone portable ou un ordinateur personnel.

35. Système de communication selon l'une quelconque des revendications 26 à 34, dans lequel le premier message est un message SIP ou un message HTTP.

36. Système de communication selon l'une quelconque des revendications 26 à 35, dans lequel le deuxième message est un message SIP ou un message HTTP.
